Europäisches Patentamt

European Patent Office

Office européen des brevets

(11) Veröffentlichungsnummer: **0 204 713**
**B1**

(12) **EUROPÄISCHE PATENTSCHRIFT**

(45) Veröffentlichungstag der Patentschrift: **11.04.90**

(51) Int. Cl.⁵: **B 21 D 3/04**

(21) Anmeldenummer: **85904962.9**

(22) Anmeldetag: **24.10.85**

(86) Internationale Anmeldenummer:
**PCT/DE85/00369**

(87) Internationale Veröffentlichungsnummer:
**WO 86/03699 03.07.86 Gazette 86/14**

(54) GESCHLOSSENE FÜHRUNGSRINNE FÜR RUNDE STANGEN.

(30) Priorität: **14.12.84 DE 3445612**

(43) Veröffentlichungstag der Anmeldung:
**17.12.86 Patentblatt 86/51**

(45) Bekanntmachung des Hinweises auf die
Patenterteilung:
**11.04.90 Patentblatt 90/15**

(84) Benannte Vertragsstaaten:
**DE FR GB IT**

(56) Entgegenhaltungen:
**WO-A-84/03060**
**DE-A-1 914 647**
**FR-A-1 274 070**
**GB-A-1 523 831**
**GB-A-1 535 162**

(73) Patentinhaber: **Th. Kieserling & Albrecht GmbH & Co.**
**Birkenweiher 66**
**D-5650 Solingen 1 (DE)**

(72) Erfinder: **HARTKOPF, Heinz**
**Marmorweg 5**
**D-5650 Solingen 1 (DE)**

Courier Press, Leamington Spa, England.

**Beschreibung**

Die Erfindung bezieht sich auf eine geschlossene Führungsrinne für runde Stangen gem. dem Oberbegriff von Anspruch 1. Derartige Rinnen werden z.B. vor Schrägrollenrichtmaschinen eingesetzt, um Beschädigungen des Werkstücks und seiner Umgebung zu vermeiden und eine maschinengerechte Zuführung der Werkstücke sicherzustellen.

Der Begriff Stangen ist dabei im weiteren Sinne zu verstehen, er soll auch Drähte und Rohre einschließen.

Die Stangen werden in Schrägrollenrichtmaschinen auf schraubenlinienförmiger Bahn axial vorbewegt. Die Schraubenlinienform der Bewegung schließt eine erhebliche Eigenrotation der Stangen um ihre Längsachse ein. Darin liegt das Problem derartiger Führungsrinnen. Insbesondere die noch nicht gerichteten Stangen, bzw. deren einlaufseitig aus der Richtmaschine herausragende Enden führen Schläge mit hoher kinetischer Energie aus.

Aus der DE—PS 1 914 647 ist eine Zuführrinne vor einer Schrägwalzenrichtmaschine bekannt, die im Querschnitt aus je einer rechten und einer linken als Winkelstück ausgebildeten Führungselement besteht, die mit ihren offenen Seiten einander zugewandt, aufeinander zu beweglich sind und den Stangen einen sich blendenartig verändernden Durchtrittsquerschnitt bieten. Die Winkelstücke eines eine Blende bildenden Paares von Winkelstücken sind in axialer Richtung dicht hintereinander angeordnet. Eine Vielzahl von Blenden ist in Längsrichtung der Rinne hintereinander angeordnet. Jedes Winkelstück ist auf seiner dem Werkstück zugewandten Seite mit einem Schutzbelag, der aufgeklebt oder angeschraubt sein kann, ausgekleidet. Der Durchtrittsquerschnitt der Blenden wird dem zu führenden Wekstückdurchmesser angepaßt. Ziel des Anpassens des Durchtrittsquerschnittes an den Werkstückdurchmesser ist es, ein Schlagen der Stange in der Zuführrinne gar nicht erst entstehen zu lassen.

Nachteilig bei dieser Rinne ist es, daß sie entweder mit relativ hohen Kräften den Durchtrittsquerschnitt für die noch krummen Stangen an den Stagendurchmesser anpassen muß, oder daß sie die Stangen, im Rinnenquerschnitt gesehen, mit Spiel umschließt und dann nicht den gewünschten Beruhigungseffekt auf das Werkstück ausübt. Bei der letzten, in der Praxis gebräuchlichen Einstellung kommt das durch das Schlagen entstehende Geräusch als Nachteil hinzu. Durch das Schlagen der Stangen in der Rinne entsteht zudem ein erheblicher Verschleiß in der Rinne, der einen nennenswerten Aufwand für die Erneuerung der Schutzbelages innen an den Winkelstücken mit sich bringt, da es sich um eine große Zahl von Winkelstücken handelt.

Aus der GB—A—1 535 162 ist eine geschlossene Führungsrinne für runde Stangen nach dem Oberbegriff des Anspruchs 1 bekannt, die im Querschnitt aus 2 Reihen von Prismenabschnitten besteht, die, in axialer Richtung auf Lücke angeordnet, von einander gegenüber liegenden Seiten die zu transportierende Stange einfassen. Die Prismen begrenzen den Durchtrittsquerschnitt für die Stange wie die Lamellen einer Blende. Die Prismen auf einer Seite der Stange sind ortsfest, die gegenüberliegenden Prismen sind an einer gemeinsamen Klappe angeordnet, die in geöffneter Stellung ein seitliches Einbringen einer Stange ermöglicht und in geschlossener Stellung die der Richtmaschine zuzuführende Stange umgibt und gegen seitliches Ausbrechen sichert. Bei einer Reihe von Prismenabschnitten sind diese einzeln federnd am Gehäuse abgestützt. Alle Prismenabschnitte tragen an ihrer der Stange zugewandten Seite Prallflächen für die Stange, die von einem Belag an dem jeweiligen Prismenabschnitt gebildet werden und die durch elastische Verformung federnd kleine Schläge des Werkstücks auffangen.

Es ist davon auszugehen, daß die Führungsrinne beim Betrieb die Stange mit Spiel umschließt. Die Praxis hat gezeigt daß bei eng umschlossener Stange die Reibkräfte so groß sind, daß der Stange die hohe Drehzahl in der Richtmaschine sonst nicht vermittelt werden kann.

Nachteilig bei dieser Lösung ist, daß bei den in der Praxis auftretenden Frequenzen der Schläge, die die ungerichtete Stange aufgrund ihrer Rotation ausführt, die Prismenabschnitte aufgrund ihrer Trägheit nicht folgen können und daß deshalb die Schlagenergie überwiegend von den Belägen an den Prismen aufgenommen werden muß, die aber aufgrund ihrer geringen Dicke und des minimalen Federweges keine nennenswerte Energie aufnehmen können. Das führt zu hohem Verschleiß an den Belägen, deren Befestigung an den Prismenabschnitten bei der Erneuerung aufwendig ist.

Der Erfindung liegt die Aufgabe zugrunde, eine geräuscharme Zuführrinne zu schaffen, die wenig Verschleiß hat und bei der das Erneuern der Verschleißteile unproblematisch ist.

Diese Aufgabe wird erfindungsgemäß durch die Merkmale von Anspruch 1 gelöst.

Die erfindungsgemäße Lösung findet vorzugsweise ihre Anwendung bei Stangen mit glatter Oberfläche. Die erfindungsgemäße Lösung kann sowohl den Durchtrittsquerschnitt der Rinne an den Stangendurchmesser anpassen als auch die Schläge mit einem hohen Dämpfungsgrad auffangen. Die Federn aus gummielastischem Material werden zumindest an einem Ende formschlüssig im Rahmen der Rinne gehalten. Sie können leicht gewendet und ausgewechselt werden. Die Federn aus gummielastischem Material stellen einerseits die Verschleißschicht dar und sind andererseits Geräuschdämpfung durch ihre Masse und ihre biegend federnde Nachgiebigkeit. Vorzugsweise ist für den Durchtrittsquerschnitt der Rinne ein V-förmiger, nach oben offener Grund vorgesehen, der von der ortsfesten Lamelle gebildet wird und ein beweglicher Deckel, der zum seitlichen Einbringen einer neuen Stange angehoben wird. Der beanspruchte Bügel hat neben der Abstützung des zugehörigen Federstabes die Funktion einer "Notsicherung". Wenn sich der Federstab irgendwann aufgrund von Verschleiß oder anderen nicht absehbaren Gründen zu sehr durchbiegen oder ausreißen sollte, bleiben weitergehende Schäden durch den Bügel, der die Stange an einem Ausbrechen hindert, vermieden. Die Bügel kommen aber nur in Ausnahmefällen zum Auffangen in Wirkung, darüberhinaus dienen sie ausschließlich der Abstüzung des zweiten Endes der Federstäbe. Im Normalfall gibt jeder Federstab im Rahmen seines Abstandes zum Bügel nach, ohne den Bügel zu berühren.

In Weiterbildung der Erfindung ist das Merkmal nach Anspruch 2 vorgesehen. Dieses Merkmal senkt den Verschleiß der Rinne. Vorzugsweise findet dasselbe Schmieröl Verwendung, das auch beim Richtprozeß selbst zur Anwendung kommt. Ergänzend ist eine sich über die Länge der Rinne erstreckende Auffangwanne für das Öl vorgesehen. Die Rinne ist auch nach oben durch einen Deckel und entsprechende Spritzbleche gegen das ungewollte Abspritzen des Öls geschützt, sie weist ringsum einen Spritzschutz auf.

Bevorzugt ist eine Ausgestaltung der Erfindung nach Anspruch 3 vorgesehen. Die Stäbe können beliebigen Querschnitt haben. Die Stäbe können als Halbzeug überall beschafft werden. In erster Linie ist an Federstäbe mit quadratischem oder rechteckigem Querschnitt gedacht, weil diese Formen ein einfaches Wenden der Federstäbe erlauben.

Bei der bevorzugten Ausführung der Erfindung nach Anspruch 4 ist vor allem daran gedacht, die Federstäbe mit zweifach klappsymmetrischem eckigem Querschnitt auszubilden, so daß sie, wenn eine Seite deutliche Verschleißerscheinungen aufweist, durch Wenden des Stabes um seine Längsachse den ursprünglichen Durchtrittsquerschnitt wieder herstellen. Ein im Querschnitt quadrtischer Stab kann also viermal gewendet werden, bis der betroffene Längsabschnitt ersetzt werden muß. Vorzugsweise sind die Federstäbe aus einem massiven gummielastischen Material hergestellt.

Zur Veränderung der Federkonstante kann die Ausführung der Erfindung nach Anspruch 5 vorgesehen sein. Der Kern kommt dabei mit den Stegen der Rinne nicht in Berührung. Der Mantel bildet eine Verschleiß- und Dämpfungsschicht von mindestens einem Zentimeter.

Das Merkmal von Anspruch 6 bieten den Vorzug einer sicheren Umschließung der in der Rinne befindlichen, durch die Richtmaschine in Eingenrotation versetzten Stange.

Alternativ zu der Ausführung der erfindungsgemäßen Rinne mit Federstäben kann die Rinne entsprechend Anspruch 7 ausgebildet sein. Die Federwirkung wird durch die über ihre Breite nachgiebig gelagerten Streifen gewährleistet.

In Weiterbildung dieser Ausführungsform ist vorgesehen, die Rinne gemäß Anspruch 8 auszubilden. Dabei wird durch die miteinander verbundenen Streifen selbst eine in Umfangsrichtung geschlossene Form der Rinne gewährleistet, die auch als Spritzschutz bezüglich des Schmieröls dient. Die Streifen können auch gewendet werden, bevor sie endgültig ersetzt werden müssen. Die Steifigkeit des Kanals aus Gummileisten wird durch die Klemmleisten sichergestellt.

Nach Anspruch 9 werden die von den Klemmleisten zusammengehaltenen Gummistreifen mit Zwischenräumen über die Länge der Rinne verteilt, von Bügeln eingeschlossen, die einerseits einen nennenswerten Durchhang der Rinne über ihre Länge gesehen, vermeiden und andererseits eine Sicherheit gegen ein Ausbrechen einer Stange aus der Rinne bieten. Auch bei dieser Ausführungsform der Erfindung werden die Gummifedern mit Abstand von den Bügeln umgriffen, um deren Eigenschaft als Biegefedern für den Normalbetrieb zu gewährleisten.

Das Merkmal nach Anspruch 10 erlaubt ein Nachschieben von unverbrauchten Längsabschnitten bei der Verwendung von Federstäben. Wenn ein Längsabschnitt des Federstabes bereichsweise verschlissen ist, wird der Stab durchgeschoben, evtl. an dem austretenden Ende gekürzt und ein neuer Längsabschnitt des Federstabes kommt in den Bereich des Durchtrittsquerschnittes, der dem größten Verschleiß ausgesetzt ist. Dabei handelt es sich in erster Linie um den V-förmigen Grund des Durchtrittsquerschnittes der Zuführrinne. Die Reserveabschnitte der Federstäbe sind vorzugsweise unterhalb des Durchtrittsquerschnittes angeordnet.

Die Erfindung wird im einzelnen anhand der Zeichnung näher erläutert, dabei zeigen:

Fig. 1: einen Querschnitt durch eine bevorzugte Ausführungsform der erfindungsgemäßen Rinne,

Fig. 2: einen Querschnitt durch eine andere Ausführungsform der erfindungsgemäßen Rinne.

Fig. 3: eine Seitenansicht auf die Rinne.

Fig. 4: einen aufgeschnitten Federstab

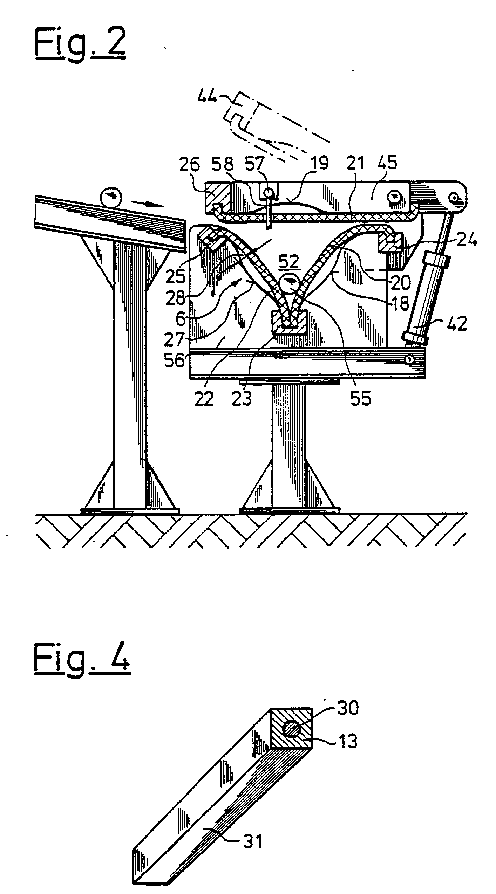

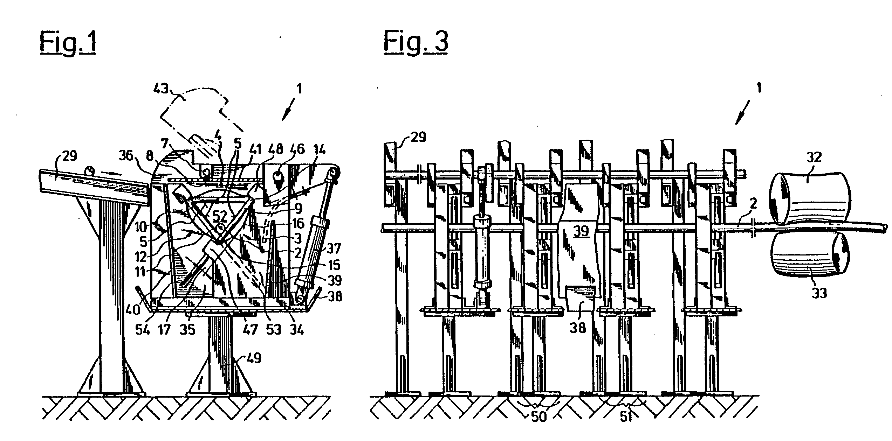

Fig. 1 zeigt eine Zuführungsrinne 1, die auf einem Sockel 49 steht und aus zwei Stegen 34, 35 und einem Deckel 36 gebildet wird. Jeder Steg und der Deckel weisen je 2 Lageraugen, z. B. 47, 48 auf, die einen Federstab 9 umgreifen. Weitere Federstäbe 10 und 11 sind entsprechend in dem Steg 35 und im Deckel 36 gehalten. Die drei Federstäbe 9, 10, 11 bilden ein Dreieck und schließen die Stange 2 in der gezeigten Querebene allseitig ein. Die Stege 34, 35 und der Deckel 36 sind in Längsrichtung der Rinne 1 hintereinander angeordnet. Ihr Abstand untereinander ist so klein wie technisch sinnvoll gehalten, der Abstand einer aus 2 Stegen und einem Deckel gebildeten Gruppe 50 zur nächsten Gruppe 51 ist größer, aber kleiner als das 25 bis 40 — fache des dünnsten Durchmessers der zu führenden Stangen. Die Deckel der einzelnen Gruppen sind untereinander durch eine gemeinsame Welle 46 verbunden, um die alle Deckel gemeinsam geschwenkt werden. Die Schwenkung erfolgt durch einen Zylinder 37 und führt zu der mit 43 bezeichneten geöffneten Stellung des Deckels 36. Im Deckel ist eine Schmierölleitung 7 vorgesehen, die sich über die gesamte Länge der Rinne erstreckt und die nach unten Austrittsöffnungen 8 aufweist, durch die die Rinne mit Schmieröl benetzt wird. Um ein weites Wegschleudern des Schmieröls von der Stange 2 zu verhindern, sind zwischen den Stegen 34, 35 und Deckeln 36 benachbarter Gruppen 50, 51 Spritzbleche 39, 40, 41 vorgesehen, die, ergänzt durch eine Auffangwanne 38 auf dem Sockel 49 eine Rückführung des abtropfenden und wegspritzenden Schmieröls erlauben.

Die Stege 34, 35 und der Deckel 36 sind zu der in der Rinne geführten Stange hin als Bügel 16, 18 und 19 ausgebildet, an deren Enden die Lageraugen 47, 48 ausgebildet sind. Die Lageraugen sind außerhalb des Durchtrittsquerschnitts 52 der Rinne angeordnet. Als Prallflächen 5 dienen ausschließlich die Federstäbe 9 bis 11. Die Federstäbe 9, 10 und 11 sind mit Abstand 17 vor den Bügeln 16, 18 und 19 angeordnet, so daß von der Stange 2 ausgehende Schläge von den Federstäben voll elastisch abgefedert werden. Hierzu können die Querschnittsabmessungen der Federstäbe zwischen Finger- und Armdicke liegen. Um die Stäbe mehrfach wenden zu können, sind sie vorzugsweise von quadratischem Querschnitt.

Zur Veränderung des Durchtrittsquerschnittes 52 kann der Deckel 36 auf nicht gezeigte Weise abgesenkt werden. Die Stege 34, 35 und der Deckel 36 bilden einzelne Lamellen 3, 4 und 12, die mit den an ihnen angebrachten Federstäben den Durchtrittsquerschnitt 52 öffnen, schließen und ggf. verändern können.

Wenn die Federstäbe 9, 10, 11, die massiv aus gummielastischem Material sind, bereichsweise verschlissen sind, z. B. im V-förmigen Grund der Rinne, können Sie zunächst einmal um ihre Längsachse gewendet werden, um dann wieder eine zur Maschinenmitte der durch die Richtrollen 32, 33 schematisch wiedergegebenen Richtmaschine zentrische Zuführung des Stabes 2 zu gewährleisten. Ergänzend weisen die Federstäbe einen außerhalb des Durchtrittsquerschnittes 52 angeordneten Längenabschnitt auf, der als Vorratsbereich 53, 54 dient. Wenn ein Federstab nach mehrmaligem Wenden an seinem Umfang deutliche Verschleißspuren hat, wird die Verbindung des Federstabes an den Lageraugen 47, 48 gelöst und der Stab wird nachgeschoben, so daß die veschlissene Stelle aus dem Bereich des hauptsächlichen Verschleisses verlagert wird.

In Fig. 2 ist eine Ausführungsform der Rinne mit sich über die Länge derselben erstreckenden Streifen 20, 21, 22 aus gummielastischem Material gezeigt. Sie ist weitgehend mit dem Stahlgerüst der in Fig. 1 gezeigten Ausführung gleich. Im V-förmigen Grund der Rinne verbindet eine Klemmleiste 23 die beiden Streifen 20, 22 an ihren Längskanten. Die gegenüberliegenden Längskanten dieser Streifen sind mit Klemmleisten 24, 25 am Steg 56 befestigt. Die Längskanten der Streifen sind teilweise um die Klemmleisten herumgezogen um die seitlich einrollende Stange vor Beschädigungen an den Klemmleisten zu schützen. Auch beim Deckel 45 sind die Längskanten des Streifens 21 um die Klemmleiste 26 herumgezogen. Die Stange 55 ist in dem gezeigten Querschnitt allseits von dem Gummistreifenmaterial eingeschlossen. Die Klemmleisten werden in geeigneten Abständen von Stegen 56 abgestützt. Der Deckel 45 wird von einem Zylinder 42 in die mit 44 bezeichnete geöffnete Stellung gesteuert. Auch diese Rinne hat eine Schmierölleitung 57 mit geeigneten Austrittsöffnungen 58 im Deckel 45, mit der der Verschleiß an den Gummifedern 6, die hier von den Streifen 20 bis 22 gebildet werden, herabgesetzt wird. Die Streifen 20 bis 22 selbst bilden eine Auffangewanne für das Schmieröl. Die Stege 56 sind bügelartig ausgeführt die Streifen 20 bis 22 werden mit Abstand 27 vor dem Steg gehalten. In dem Bereich dieses Abstandes federn die Streifen die Schläge der rotierenden Stange ab.

Die Streifen können mehrfach gewendet werden, um die Verschleißstelle zu verlagern. Auch der Deckel ist als Bügel 19 ausgeführt, so daß der Streifen 21 im Deckel durchfedern kann. Die Bügel haben in allen Fällen die Funktion bei zerstörter Feder die Stangen 2 und 55 am Ausbrechen zu hindern.

Fig. 3 zeigt die Rinne 1 in einer Seitenansicht mit im wesentlichen entfernten Spritzblechen 39, 40 und ohne die Wanne 38. Mit den Richtrollen 32, 33 wird schematisch eine Richtmaschine angedeutet.

Fig. 4 zeigt eine aufgeschnittene Darstellung eines Federstabes 31, der im Querschnitt quadratisch ist und der einen Mantel 13 aus gummiartigem Material hat. Der Federstab 31 hüllt einen Kern 30 ein, der vorzugsweise aus einem Material mit höherem Elastizitätsmodul gefertigt ist. Dadurch kann die Steifigkeit des Federstabes 31 variiert werden.

**Patentansprüche**

1. Geschlossene Führungsrinne (1) für runde Stangen (2), die folgenden Merkmale aufweist:

mindestens zwei aus gummielastischem Material gebildeten Federn (9—11; 20—22) als Prallflächen, zwischen denen die Stangen (2) axial, durchtreten können

mindestens eine Feder (9, 11; 20, 22) die ortsfest ist,

mindestens eine Feder (10; 21) die beweglich ist, um ein seitliches Einbringen der Stangen (2) zu ermöglichen

einen Durchtrittsquerschnitt der Führungsrinne, der in axialer Projektion als Mehreck erscheint, das die Stangen (2) einschließen kann gekennzeichnet durch die folgenden Merkmale

die Federn (9—11; 20—22) sind als Biegefedern ausgebildet, von denen mindestens einzelne von einem Bügel (16) mit Abstand (17) hintergriffen werden.

2. Geschlossene Führungsrinne (1) für runde Stangen (2) nach Anspruch 1, gekennzeichnet durch das folgende Merkmal:

eine Schmierölleitung (7) mit einer Mehrzahl von Austrittsöffnungen (8) entlang der Rinne.

3. Geschlossene Führungsrinne (1) für runde Stangen (2) nach Anspruch 1, gekennzeichnet durch das folgende Merkmal:

die Federn sind als Federstäbe (9, 10, 11) ausgebildet.

4. Geschlossene Führungsrinne (1) für runde Stangen (2) nach Anspruch 1, gekennzeichnet durch die folgenden Merkmale:

die Federstäbe (9, 10, 11) sind gerade,

die Rinne hat drei Lamellen (3, 4, 12),

die drei Lamellen sind hintereinander versetzt in einer Querebene der Rinne angeordnet und bilden in einer Stirnseitenansicht der Rinne ein Dreieck.

5. Geschlossene Führungsrinne (1) für runde Stangen (2) nach Anspruch 3, gekennzeichnet durch das folgende Merkmal:

die Federstäbe (9, 10, 11) haben einen Mantel (13) und einen Kern (30),

wobei der Mantel aus gummiartigem Material ist und der Kern aus einem anderen Material.

6. Geschlossene Führungsrinne (1) für runde Stangen (2) nach Anspruch 2, gekennzeichnet durch das folgende Merkmal:

die Federstäbe sind an beiden Enden (14, 15) abgestützt.

7. Geschlossene Führungsrinne (1) für runde Stangen (2) nach Anspruch 1 und 2, gekennzeichnet durch das folgende Merkmal:

die Federn bestehen aus sich über die Länge der Rinne erstreckenden Streifen (20, 21, 22) aus gummielastischem Material.

8. Geschlossene Führungsrinne (1) für runde Stangen (2) nach Anspruch 7, gekennzeichnet durch das folgende Merkmal:

die Streifen (20, 21, 22) sind an Längskanten mit selbsttragenden Klemmleisten (23, 24, 25, 26) eingefaßt.

9. Geschlossene Führungsrinne (1) für runde Stangen (2) nach Anspruch 8, gekennzeichnet durch das folgende Merkmal:

über die Länge der Rinne verteilt sind einige Bügel (27) in einer Querebene der Rinne angeordnet, die die Klemmleisten (23, 24, 25, 26) abstützen und die die Streifen (20, 21, 22) mit Abstand (28) hintergreifen.

10. Geschlossene Führungsrinne (1) für runde Stangen (2) nach Anspruch 3, gekennzeichnet durch das folgende Merkmal:

die Federstäbe haben einen über den Durchtrittsquerschnitt der Rinne hinausragenden Längsabschnitt, der in Achsrichtung der Stäbe nachgeschoben werden kann.

## Revendications

1. Goulotte de guidage fermée (1) pour barres rondes (2), présentant les caractéristiques suivantes:

au moins deux ressorts (9—11; 20—22) réalisés en caoutchouc élastique, comme surface d'impact, entre lesquels les barres (2) peuvent traverser axialement,

au moins un ressort (9—11; 20—22), fixe en position,

au moins un ressort (10; 21), mobile, pour permettre une entrée latérale des barres (2),

une section de passage de la goulotte de guidage apparaissant, en projection axiale, comme un polygone pouvant enfermer les barres.
caractérisée en ce que:

les ressorts (9—11; 20—22) sont réalisés sous la forme de ressorts lamellaires, dont au moins quelques uns sont retenus par derrière par un étrier (16) à une distance (17).

2. Goulotte de guidage fermée (1) pour barres rondes (2), suivant la revendication 1, caractérisée par: une conduite d'huile de graissage (7), comportant plusieurs orifices de sortie le long de la goulotte.

3. Goulotte de guidage fermée (1) pour barres rondes (2), suivant la revendication 1, caractérisée en ce que les ressorts sont réalisés sous la forme de lames de ressort (9, 10, 11).

4. Goulotte de guidage fermée (1) pour barres rondes (2), suivant la revendication 1, caractérisée par les caractéristiques suivantes:

Les lames de ressort (9, 10, 11) sont rectilignes,

La goulotte présente trois lamelles (3, 4 et 12),

Les trois lamelles sont disposées, décalées l'une derrière l'autre, dans un plan transversal de la goulotte et forment, vues de face, un triangle.

5. Goulotte de guidage fermée (1) pour barres rondes (2), suivant la revendication 3, caractérisée en ce que les lames de ressort (9, 10, 11) présentent un manteau enveloppant (13) et un noyau (30), le manteau enveloppant étant constitué d'un matériau en caoutchouc élastique, et le noyau d'un autre matériau.

6. Goulotte de guidage fermée (1) pour barres rondes (2), suivant la revendication 3, caractérisée en ce que les lames de ressort sont supportées aux deux extrémités.

7. Goulotte de guidage fermée (1) pour barres rondes (2), suivant la revendication 1 et la revendication 2, caractérisée en ce que les ressorts sont constitués de bandes (20, 21, 22) en caoutchouc élastique, s'étendant sur la longueur de la goulotte.

8. Goulotte de guidage fermée (1) pour barres rondes (2), suivant la revendication 7, caractérisée en ce que les bandes (20, 21, 22) sont reprises sur leur bords longitudinaux par des baguettes de blocage (23, 24, 25, 26) autoportantes.

9. Goulotte de guidage fermée (1) pour barres rondes (2), suivant la revendication 8, caractérisée en ce que quelques étriers (27) sont disposés, répartis sur la longueur de la goulotte, dans un plan transversal de la goulotte, étriers que supportent les baguettes de blocage (23, 24, 25, 26) et qui reprennent par derrière les bandes (20, 21, 22) à la distance (28).

10. Goulotte de guidage fermée (1) pour barres rondes (2), suivant la revendication 3, caractérisée en ce que les lames de ressort présentent un tronçon dépassant de la section de passage de la goulotte, tronçon que l'on peut faire coulisser suivant la direction de l'axe des lames.

## Claims

1. Closed channel (1) for round stock (2) comprising the following features:

at least two elastic elements (9—11, 20—22) of rubber-like material serving as pads, forming a path for longitudinal traverse of the stock (2),

at least one elastic element (9, 11; 20, 22) being anchored,

at least one elastic element (10, 21) being movable to allow for lateral insertion of the stock (2),

a cross-sectional opening of the channel, an axial projection of which appears as a polygon, that is capable of encircling the stock (2)

characterised by the following features:

the elastic elements (9—11; 20—22) are formed as flexible elastic elements, at least some of which are supported by a recessed support (16) with an intermediate gap (17).

2. Closed channel (1) for round stock (2) according to claim 1 characterised by the following feature:

a lubrication pipe (7) with a plurality of nozzles (8) is provided along the channel.

3. Closed channel (1) for round stock (2) according to claim 1 characterised by the following feature:

the elastic elements are shaped as elastic rods (9, 10, 11).

4. Closed channel (1) for round stock (2) according to claim 1 characterised by the following features:

the elastic rod elements (9, 10, 11) are straight,

the channel has three segments (3, 4, 12),

the three segments are staggered one behind the other seen in a cross-section of the channel and form a triangle in an end-on view of the channel.

5. Closed channel (1) for round stock (2) according to claim 3 characterised by the following feature:

the elastic elements (9, 10, 11) have a coating (13) and a core (30), wherein the coating is of rubber-like material and the core of a different material.

6. Closed channel (1) for round stock (2) according to claim 1 characterised by the following feature:

the elastic rod elements are supported at both ends (14, 15).

7. Closed channel (1) for round stock (2) according to claims 1 and 2 characterised by the following feature:

the elastic elements comprise strips (20, 21, 22) of rubber-like material extending along the length of the channel.

8. Closed channel (1) for round stock (2) according to claim 7 characterised by the following feature:

the strips (20, 21, 22) are clamped in position by their longitudinal edges with self-supporting clamping strips (23, 24, 25, 26).

9. Closed channel (1) for round stock (2) according to claim 8 characterised by the following feature:

some supports (27) are provided in a cross-section of the channel, distributed along the length of the channel, supporting the clamping strips (23, 24, 25, 26) and creating a recess (28) behind the strips (20, 21, 22).

10. Closed channel (1) for round stock (2) according to claim 3 characterised by the following feature:

the elastic elements have a longitudinal section extending beyond the cross-sectional opening of the channel and which can be advanced in the longitudinal direction of the stock.

EP 0 204 713 B1

# Fig. 2

# Fig. 4

1

Fig.3

Fig.1